# EUROPÄISCHE PATENTSCHRIFT

(11) **EP 2 069 615 B1**
(45) Veröffentlichungstag und Bekanntmachung des Hinweises auf die Patenterteilung: **29.12.2010**
(21) Anmeldenummer: 07787919.5
(22) Anmeldetag: 26.07.2007
(51) Int. Cl.: F01N 3/022, B01D 46/24

(54) **FILTERELEMENT, INSBESONDERE ZUR FILTERUNG VON ABGASEN EINER BRENNKRAFTMASCHINE**
FILTER ELEMENT, ESPECIALLY FOR FILTERING THE EXHAUST GASES OF AN INTERNAL COMBUSTION ENGINE
ÉLÉMENT FILTRANT DESTINÉ EN PARTICULIER AU FILTRAGE DES GAZ D'ÉCHAPPEMENT D'UN MOTEUR À COMBUSTION INTERNE

(30) Priorität: 25.09.2006 DE 102006045164
(43) Veröffentlichungstag der Anmeldung: 17.06.2009
(73) Patentinhaber: Robert Bosch GmbH, 70442 Stuttgart (DE)
(72) Erfinder: HILLER, Peter, 70195 Stuttgart (DE); DIETZHAUSEN, Holger, 70499 Stuttgart (DE); MICHAELIS, Burkhard, 71665 Vaihingen/Enz (DE); HOEFFKEN, Tobias, 70192 Stuttgart (DE)
(86) Internationale Anmeldenummer: PCT/EP2007/057693
(87) Internationale Veröffentlichungsnummer: WO 2008/037521

(56) Entgegenhaltungen:
- EP-A1- 1 371 406
- EP-A2- 0 900 922
- WO-A-2005/059323
- DE-A1- 4 200 552

## Beschreibung

### Stand der Technik

Die Erfindung betrifft ein Filterelement, insbesondere zur Filterung von Abgasen einer Brennkraftmaschine, nach dem Oberbegriff des Anspruchs 1, sowie einen Partikelfilter und eine Abgasreinigungsanlage mit einem Filterelement.

Das zu reinigende Abgas durchströmt die zwischen den Eintrittskanälen und den Austrittskanälen angeordneten, offenporigen Filterwände. Hierbei lagern sich mit der Zeit an der stromaufwärts gelegenen Oberfläche der Filterwände Rußpartikel ab. Diese Rußpartikel führen zu einer Verringerung der Durchlässigkeit der Filterwände und in Folge dessen zu einer Erhöhung des Druckabfalls, der beim Durchtritt des Gasstroms durch die Filterwände auftritt. Entsprechend erhöht sich der sogenannte "Abgasgegendruck". Überschreitet dieser einen bestimmten Wert, wird der Filter regeneriert, indem die abgeschiedenen Rußpartikel verbrannt werden. Hierfür kann die Temperatur des Abgases, welches durch das Filterelement geleitet wird, erhöht werden. Dies wird beispielsweise durch die Einspritzung von zusätzlichem Kraftstoff bewirkt.

Während der Regeneration des Filterelements ist die Temperaturverteilung innerhalb des Filterelements derart, dass maximale Temperaturen im Inneren des Filterelements und weitaus niedrigere Temperaturen in einem äußeren Randbereich des Filterelements auftreten. Dies führt zu lokal unterschiedlichen Wärmeausdehnungen, die bewirken, dass im Filterelement hohe mechanische Spannungen auftreten können. Diese Spannungen können im ungünstigsten Fall zu Rissbildungen im Filterelement führen.

Die EP 900922 beschreibt Partikelfilter mit geschichteten bzw. konzentrisch angeordneten Ein- und Auslassbereichen.

Die EP1371406 zeigt Filter mit verschiedenen Außenkonturen.

### Offenbarung der Erfindung

Aufgabe der vorliegenden Erfindung ist es, ein Filterelement zu schaffen, mit dem die genannte Rissbildung vermieden oder zumindest eingeschränkt werden kann.

Die der Erfindung zugrundeliegende Aufgabe wird bei einem eingangs genannten Filterelement dadurch gelöst, dass der Verlauf zumindest eines Teils der Filterwände eines äußeren Bereichs des Filterelements dem Verlauf einer zumindest abschnittsweise gekrümmten Außenseite des Filterelements angepasst ist.

### Vorteilhafte Wirkungen

Mit der erfindungsgemäßen Geometrie der Filterwände wird erreicht, dass in einem äußeren Bereich des Filterelements höhere Spannungen aufgenommen werden können, ohne dass das Material in diesem Bereich versagt. Die in einem äußeren Bereich des Filterelements auftretenden Zugspannungen können am besten aufgenommen werden, wenn zumindest ein Teil der Filterwände der in diesem Bereich angeordneten Einlasskanäle und Auslasskanäle in ihrem Verlauf dem Verlauf der gekrümmten Außenseite angepasst ist. Bei einem herkömmlichen Filterelement hingegen sind die Einlasskanäle und Auslasskanäle auch in einem äußeren Bereich des schachbrettartig zueinander versetzt, so dass die Einlasskanäle und Auslasskanäle an der Außenseite in ihrer im Wesentlichen quadratischen Grundform beschnitten sind. Diese ungleichmäßig geformten, außen liegenden Einlasskanäle und Auslasskanäle bilden Materialschwächungsbereiche, die eine Rissbildung begünstigen. Dabei ist es in vorteilhafter Weise vorgesehen, dass der äußere Bereich an einen insgesamt im Querschnitt mehreckigen, inneren Bereich des Filterelements angrenzt. Dieser mehreckige Bereich erlaubt es, Einlasskanäle und Auslasskanäle mit herkömmlicher Geometrie vorzusehen, insbesondere, wenn der innere Bereich einen im Wesentlichen insgesamt viereckigen Querschnitt aufweist. Ferner ist vorteilhafter Weise vorgesehen, dass der innere Bereich an seinen Grenzen zu dem äußeren Bereich des Filterelements nach außen gewölbt ist, so dass im Bereich des Übergangs zwischen dem inneren Bereich und dem äußeren Bereich ein sanfter Geometriewechsel erreicht wird. Insgesamt kann auf diese Weise eine Geometrie erzeugt werden, die auch mit dem Begriff "O-Grid" bezeichnet wird. Dieser kennzeichnet sich dadurch, dass ein insgesamt kreisförmiger oder ovaler Querschnitt eines zylindrischen oder ovalen Filterelements mit im Querschnitt viereckigen Kanälen ausgefüllt werden kann, ohne dass dabei die Querschnitte der einzelnen Kanäle stark von einer Quadrat- oder einer Rechteckform abweichen.

Das erfindungsgemäße Filterelement kann einen im Wesentlichen zylindrischen oder ovalen Querschnitt aufweisen. In diesem Fall weist die gesamte Außenseite des Filterelements einen gekrümmten Verlauf auf. Es ist jedoch auch möglich, dass das Filterelement eine Außenseite aufweist, die im Querschnitt wechselweise von gradlinig verlaufenden Abschnitten und von gekrümmt verlaufenden Abschnitten begrenzt ist. Ein solcher Querschnitt weist eine Grundform auf, die im Querschnitt mehreckig, beispielsweise dreieckig oder quadratisch ist. Die Kanten dieser Mehrecke bilden dann gradlinig verlaufende Abschnitte, zwischen denen (in den Eckbereichen der Grundform) gekrümmt verlaufende Abschnitte vorgesehen sind.

Für die genannten Querschnitte ist es vorteilhaft, wenn die Filterwände in einem zu der gekrümmten Außenseite benachbarten Bereich zueinander konzentrisch sind. Wenn sich ein Teil der Filterwände in radialer Richtung erstreckt, können auf diese Weise mit Hilfe der zueinander konzentrisch angeordneten Filterwände und mit Hilfe der sich in radialer Richtung erstreckenden Filterwände Einlasskanäle und Auslasskanäle geschaffen werden, deren Querschnitt nur wenig von einer quadratischen oder rechteckigen Grundform abweicht.

Wenn die Filterwände einer direkt zu der Außenseite des Filterelements benachbarten Reihe von Einlasskanälen und Auslasskanälen den Verlauf der Außenseite angepasst sind, können die in diesem Bereich bei einer Regeneration des Filterelements besonders hohen Zugspannungen gut aufgenommen werden. Hierdurch kann vermieden werden, dass in diesem besonders gefährdeten Bereich Risse entstehen, die sich dann in weniger gefährdete Bereiche fortpflanzen können. Dies kann besonders gut verhindert werden, wenn die Filterwände mehrerer zueinander benachbarter Reihen von Einlasskanälen und Auslasskanälen dem Verlauf der Außenseite angepasst sind. Hierdurch können auch schroffe Geometriewechsel zwischen einer am weitesten außen angeordneten Reihe von Einlasskanälen und Auslasskanälen und einer relativ zu dieser innen liegenden Reihe von Einlasskanälen und Auslasskanälen vermieden werden.

Der äußere Bereich, das heißt der Bereich, in dem der Verlauf eines Teils der Filterwände dem Verlauf der Außenseite an gepasst ist, kann sich von der Außenseite bis hin zu einem 0,1 bis 0,4fachen des größten Durchmessers des Filterelements erstrecken.

Der innere Bereich kann exakt quadratisch oder rechteckig ausgebildet sein.

Die beschriebene "O-Grid"-Geometrie kann damit einhergehen, dass der äußere Bereich in Segmente unterteilt ist, wobei die Segmentgrenzen zwischen den Segmenten in radialer Richtung verlaufen. Diese Segmentgrenzen können sich von der Außenseite des Filterelements bis hin zu Eckbereichen des inneren Bereichs des Filterelements erstrecken. Auf diese Weise wird der Querschnitt des Filterelements in Segmente des äußeren Bereichs und in einen inneren Bereich aufgeteilt. Bei Anlehnung an die hierdurch erzeugte Geometrievorgabe kann eine besonders gleichmäßige Verteilung von jeweils im Querschnitt viereckigen Einlasskanälen und Auslasskanälen erreicht werden.

Um im Bereich des Übergangs zwischen einzelnen Segmenten des äußeren Bereichs und dem inneren Bereich möglichst hohe mechanische Festigkeiten erzielen zu können, wird vorgeschlagen, dass in einem Eckbereich des inneren Bereichs des Filterelements eine eine Segmentgrenze bildende Filterwand und zwei weitere Filterwände so aufeinander zu laufen, dass zwischen jeweils zwei Filterwänden ein Winkel 100° bis 140°, insbesondere von 110° bis 130°, weiter insbesondere von 120° eingeschlossen ist. Die genannten zwei weiteren Filterwände bilden dabei gleichzeitig die Grenzen zwischen dem innen liegenden Bereich und den jeweils hierzu benachbarten äußeren Segmenten.

Bei einer herkömmlichen, schachbrettartigen Anordnung von Einlasskanälen und Auslasskanälen ist jeweils ein Einlasskanal zu vier Auslasskanälen und ein Auslasskanal zu vier Einlasskanälen benachbart. Um eine solche geometrische Relation auch in den Eckbereichen des inneren Bereichs des Filterelements erzielen zu können, wird vorgeschlagen, dass zwei an ein Segment grenzende, in Umfangsrichtung zueinander benachbarte Kanäle zu einem gemeinsamen Einlasskanal zusammengefasst sind und dass zwei quer zur Umfangsrichtung zu diesem benachbarte Kanäle zu einem gemeinsamen Auslasskanal zusammengefasst sind.

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und den Patentansprüchen beschriebenen Merkmale können sowohl einzeln als auch in beliebiger Kombination miteinander erfindungswesentlich sein.

### Kurze Beschreibung der Zeichnungen

Es zeigen:
- Figur 1: eine schematische Darstellung einer Brennkraftmaschine mit einer Abgasreinigungsanlage und mit einem Filterelement;
- Figur 2: einen Längsschnitt des Filterelements;
- Figur 3: einen schematischen Querschnitt des Filterelements;
- Figur 4: einen detaillierten Querschnitt des Filterelements gemäß einer ersten Ausführungsform und
- Figur 5: einen detaillierten Querschnitt des Filterelements gemäß einer zweiten Ausführungsform.

### Ausführungsformen der Erfindung

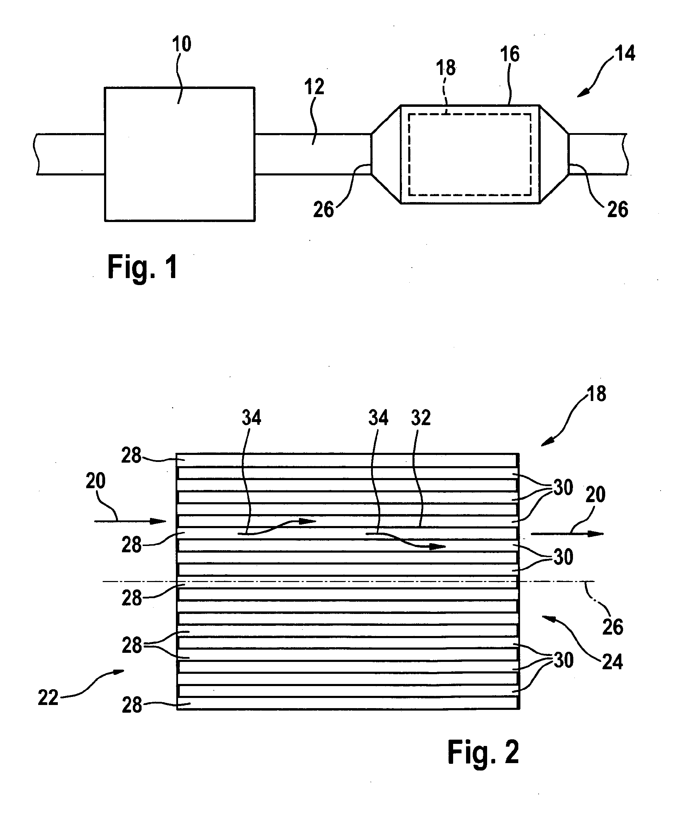

In Figur 1 trägt eine Brennkraftmaschine das Bezugszeichen 10. Die Abgase werden über ein Abgasrohr 12 einer Abgasreinigungsanlage 14 zugeleitet. Diese umfasst einen Partikelfilter 16, mit dem Rußpartikel aus dem im Abgasrohr 12 strömenden Abgas herausgefiltert werden. Dies ist insbesondere bei Diesel-Brennkraftmaschinen erforderlich, um gesetzliche Bestimmungen einzuhalten.

Der Partikelfilter 16 umfasst ein insgesamt im Wesentlichen zylindrisches Filterelement 18.

In Figur 2 ist das Filterelement 18 in einem Längsschnitt dargestellt. Das Filterelement 18 kann beispielsweise als extrudierter Formkörper aus einem keramischen Material, wie zum Beispiel Cordierit, hergestellt werden.

Das Filterelement 18 wird in Richtung der Pfeile 20 von Abgas der Brennkraftmaschine 10 durchströmt. Eine Eintrittsfläche für das zu filternde Abgas trägt in Figur 2 das Bezugszeichen 22, eine Austrittsfläche für gefiltertes Abgas das Bezugszeichen 24.

Parallel zu einer Längsachse 26 des Filterelements 18 verlaufen mehrere Einlasskanäle 28 und Auslasskanäle 30. Die Einlasskanäle 28 sind an der Eintrittsfläche 22 offen und an der Austrittsfläche 24 geschlossen. Im Gegensatz dazu sind die Auslasskanäle 30 an der Austrittsfläche 24 offen und im Bereich der Eintrittsfläche 22 geschlossen.

Der Strömungsweg des ungereinigten Abgases führt also in einen der Einlasskanäle 28 und von dort über eine Filterwand 32 in einen der Auslasskanäle 30. Exemplarisch ist dies durch Pfeile 34 dargestellt.

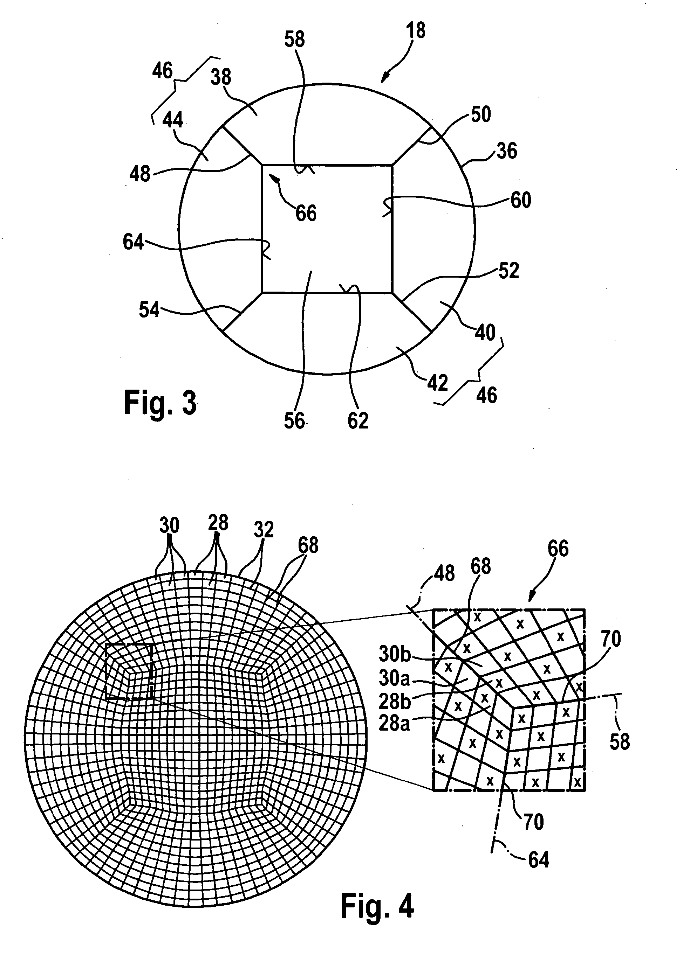

In Figur 3 ist das Filterelement 18 schematisch in einem Querschnitt dargestellt. Innerhalb einer zylindrischen Außenseite 36 sind vier radial äußere Segmente 38, 40, 42 und 44 angeordnet, die insgesamt einen radial äußeren Bereich 46 des Filterelements 18 bilden. Diese stoßen an in radialer Richtung verlaufenden Segmentgrenzen 48, 50, 52 und 52 und 54 aneinander an.

Das Filterelement 18 weist ferner einen im Querschnitt quadratischen inneren Bereich 56 auf. Dieser erstreckt sich innerhalb von Grenzen 58 bis 64. Zwischen den genannten Grenzen sind Eckbereiche 66 ausgebildet, an denen auch die Segmentgrenzen 58 bis 54 münden.

Während Figur 3 den Querschnitt des Filterelements 18 in einer vereinfachten, schematischen Form darstellt, zeigt Figur 4 eine auf dieser Grundform aufbauende, optimierte Verteilung von Einlasskanälen 28 und Auslasskanälen 30. In Figur 4 ist zu erkennen, dass die in dem radial äußeren Bereich 46 des Filterelements 18 angeordneten Einlasskanäle 28 und Auslasskanäle 30 jeweils von zueinander im Wesentlichen konzentrischen Filterwänden 32 und von im Wesentlichen in radialer Richtung verlaufenden Filterwänden 68 begrenzt sind. Der Figur 4 lässt sich außerdem entnehmen, dass in dem radial äußeren Bereich 46 mehrere zueinander konzentrische Reihen von Kanälen 28 und 30 angeordnet sind. In dem gewählten Ausführungsbeispiel erstreckt sich der radial äußere Bereich 46 in radialer Richtung über etwas mehr als die Hälfte des Radius des Filterelements 18.

In Figur 4 rechter Hand ist der auch in Figur 3 angedeutete Eckbereich 66 detailliert dargestellt. Dort ist zu erkennen, dass die Grenzen 58 und 64 des inneren Bereichs 56 und die Segmentgrenze 48 zwischen den Segmenten 38 und 44 aufeinander stoßen. Die Grenzen 58 und 64 und die Segmentgrenze 48 sind jeweils durch Filterwände 68 beziehungsweise 70 gebildet.

In Figur 4 sind die Einlasskanäle 28 jeweils mit einem Kreuzsymbol gekennzeichnet. Jeweils versetzt zu diesen sind die Auslasskanäle 30 angeordnet. Aus Figur 4 geht hervor, dass jeder Einlasskanal 28 zu jeweils vier Auslasskanälen 30 beziehungsweise jeder Auslasskanal 30 zu jeweils vier Einlasskanälen 28 benachbart ist. Dies gilt jedoch nicht für den Bereich benachbart zu der Segmentgrenze 48 beziehungsweise zu der Filterwand 68. Hier sind jeweils zwei Einlasskanäle 28a und 28b und zwei Auslasskanäle 30a und 30b zueinander benachbart.

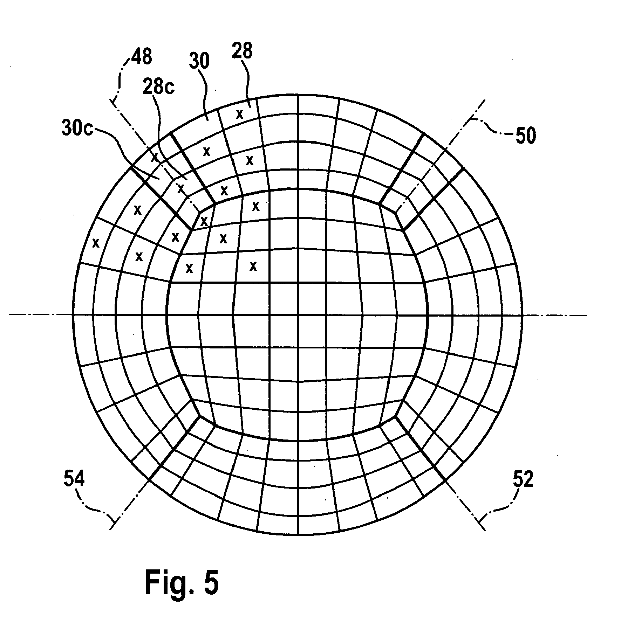

Um auch in dem Bereich der Segmentgrenzen 48 bis 54 eine gleichmäßige Verteilung von Einlasskanälen 28 und 30 erreichen zu können, wird eine im Folgenden beschriebene Geometrie vorgeschlagen. Der in Figur 5 unterhalb einer strichpunktierten Horizontalen (ohne Bezugszeichen) dargestellte Teil entspricht der Geometrie gemäß Figur 4. Der in Figur 5 oberhalb der Horizontalen dargestellte Teil weist eine gegenüber der Figur 4 modifizierte Geometrie auf. Im Bereich der Segmentgrenze 48 sind die Einlasskanäle 28a und 28b zu einem gemeinsamen Einlasskanal 28c zusammengefasst. In entsprechender Weise sind die Auslasskanäle 30a und 30b zu einem gemeinsamen Auslasskanal 30c zusammengefasst. Auf diese Weise kann über den gesamten Querschnitt des Filterelements 18 eine Struktur erzeugt werden, bei der jeweils ein Einlasskanal 28 zu jeweils vier Auslasskanälen 30 beziehungsweise jeweils ein Auslasskanal 30 zu jeweils vier Einlasskanälen 28 benachbart angeordnet ist.

## Patentansprüche

1. Filterelement (18), insbesondere zur Filterung von Abgasen einer Brennkraftmaschine (10), mit in Durchströmungsrichtung (20) eingangsseitig offenen und ausgangsseitig geschlossenen Einlasskanälen (28) und mit in Durchströmungsrichtung (20) eingangsseitig geschlossenen und ausgangsseitig offenen Auslasskanälen (30), wobei die Einlasskanäle (28) und die Auslasskanäle (30) durch Filterwände (32) begrenzt sind, **dadurch gekennzeichnet, dass** der Verlauf zumindest eines Teils der Filterwände (32) eines äußeren Bereichs (46) des Filterelements (18) dem Verlauf einer zumindest abschnittsweise gekrümmten Außenseite (36) des Filterelements (18) angepasst ist, wobei der äußere Bereich (46) an einen insgesamt im Querschnitt mehreckigen, inneren Bereich (56) des Filterelements (18) angrenzt, wobei der innere Bereich (56) an seinen Grenzen (58-64) zu dem äußeren Bereich (46) des Filterelements (18) nach außen gewölbt ist, wobei der innere Bereich (56) einen im Wesentlichen insgesamt viereckigen Querschnitt aufweist und wobei die in dem inneren Bereich (56) vorgesehenen Filterwände (70) so angeordnet sind, dass die durch diese Filterwände (70) begrenzten Einlasskanäle (28) und Auslasskanäle (30) einen zumindest annähernd quadratischen Querschnitt aufweisen.

2. Filterelement (18) nach Anspruch 1, **dadurch gekennzeichnet, dass** der Querschnitt des Filterelements (18) im Wesentlichen zylindrisch oder oval ist.

3. Filterelement (18) nach Anspruch 1, **dadurch gekennzeichnet, dass** die Außenseite (36) des Filterelements im Querschnitt wechselweise von geradlinig verlaufenden Abschnitten und von gekrümmt verlaufenden Abschnitten begrenzt ist.

4. Filterelement (18) nach mindestens einem der vorhergehenden Ansprüche, **dadurch gekennzeichnet, dass** die Filterwände (32) in einem zu der gekrümmten Außenseite (36) benachbarten Bereich zueinander konzentrisch angeordnet sind.

5. Filterelement (18) nach mindestens einem der vorhergehenden Ansprüche, **dadurch gekennzeichnet, dass** sich ein Teil der Filterwände (68) in radialer Richtung erstreckt.

6. Filterelement (18) nach mindestens einem der vorhergehenden Ansprüche, **dadurch gekennzeichnet, dass** die Filterwände einer direkt zu der Außenseite (36) des Filterelements (18) benachbarten Reihe von Einlasskanälen (28) und Auslasskanälen (30) dem Verlauf der Außenseite (36) angepasst sind.

7. Filterelement (18) nach mindestens einem der vorhergehenden Ansprüche, **dadurch gekennzeichnet, dass** die Filterwände (32) mehrerer zueinander benachbarter Reihen von Einlasskanälen (28) und Auslasskanälen (30) dem Verlauf der Außenseite (36) angepasst sind.

8. Filterelement (18) nach mindestens einem der vorhergehenden Ansprüche, **dadurch gekennzeichnet, dass** sich der äußere Bereich (46) des Filterelements (18) von der Außenseite (36) bis hin zu einem 0,1 bis 0,4-fachen des größten Durchmessers des Filterelements (18) erstreckt.

9. Filterelement (18) nach mindestens einem der vorhergehenden Ansprüche, **dadurch gekennzeichnet, dass** der äußere Bereich (46) in Segmente (38 - 44) unterteilt ist, wobei die Segmentgrenzen (48 - 54) zwischen den Segmenten (38 - 44) in radialer Richtung verlaufen.

10. Filterelement (18) nach Anspruch 9, **dadurch gekennzeichnet, dass** sich die Segmentgrenzen (48 - 54) von der Außenseite (36) des Filterelements (18) bis hin zu Eckbereichen (66) des inneren Bereichs (56) des Filterelements (18) erstrecken.

11. Filterelement (18) nach Anspruch 10, **dadurch gekennzeichnet, dass** in einem Eckbereich (66) eine eine Segmentgrenze (48) bildende Filterwand (68) und zwei weitere Filterwände (70) so aufeinander zulaufen, dass zwischen jeweils zwei Filterwänden (68, 70) ein Winkel von 100° bis 140°, insbesondere von 110° bis 130°, weiter insbesondere von 120° eingeschlossen ist.

12. Filterelement (18) nach mindestens einem der Ansprüche 9 bis 11, **dadurch gekennzeichnet, dass** zwei an eine Segmentgrenze (48) angrenzende, in Umfangsrichtung zueinander benachbarte Kanäle (28a, 28b) zu einem gemeinsamen Einlasskanal (28c) zusammengefasst sind und dass zwei quer zur Umfangsrichtung zu diesem benachbarte Kanäle (30a, 30b) zu einem gemeinsamen Auslasskanal (30c) zusammengefasst sind.

13. Partikelfilter (16) mit einem Filterelement (18) nach einem der vorhergehenden Ansprüche.

14. Abgasreinigungsanlage (14), insbesondere mit einem Partikelfilter (16), mit einem Filterelement (18) nach mindestens einem der Ansprüche 1 bis 12.

## Claims

1. Filter element (18), in particular for filtering exhaust gases of an internal combustion engine (10), having inlet ducts (28) which in the throughflow direction (20) are open at the inlet side and closed at the outlet side, and having outlet ducts (30) which in the throughflow direction (20) are closed at the inlet side and open at the outlet side, with the inlet ducts (28) and the outlet ducts (30) being delimited by filter walls (32), **characterized in that** the profile of at least a part of the filter walls (32) of an outer region (46) of the filter element (18) is matched to the profile of an outer side (36), which is curved at least in sections, of the filter element (18), with the outer region (46) adjoining an inner region (56), which is of polygonal cross section overall, of the filter element (18), with the inner region (56) being arched in the outward direction at its boundaries (58-64) to the outer region (46) of the filter element (18), with the inner region (56) having a substantially square cross section overall, and with the filter walls (70) provided in the inner region (56) being arranged such that inlet ducts (28) and outlet ducts (30) delimited by said filter walls (70) have an at least approximately square cross section.

2. Filter element (18) according to Claim 1, **characterized in that** the cross section of the filter element (18) is substantially cylindrical or oval.

3. Filter element (18) according to Claim 1, **characterized in that** the outer side (36) of the filter element is delimited in cross section alternately by rectilinear sections and by curved sections.

4. Filter element (18) according to at least one of the preceding claims, **characterized in that** the filter walls (32) are arranged concentrically with respect to one another in a region adjacent to the curved outer side (36).

5. Filter element (18) according to at least one of the preceding claims, **characterized in that** a part of the filter walls (68) extends in the radial direction.

6. Filter element (18) according to at least one of the preceding claims, **characterized in that** the filter walls of a row of inlet ducts (28) and outlet ducts (30) directly adjacent to the outer side (36) of the filter element (18) are matched to the profile of the outer side (36).

7. Filter element (18) according to at least one of the preceding claims, **characterized in that** the filter walls (32) of a plurality of rows of inlet ducts (28) and outlet ducts (30) adjacent to one another are matched to the profile of the outer side (36).

8. Filter element (18) according to at least one of the preceding claims, **characterized in that** the outer region (46) of the filter element (18) extends from the outer side (36) as far as a diameter 0.1 to 0.4 times the greatest diameter of the filter element (18).

9. Filter element (18) according to at least one of the preceding claims, **characterized in that** the outer region (46) is divided into segments (38-44), with the segment boundaries (48-54) running between the segments (38-44) in the radial direction.

10. Filter element (18) according to Claim 9, **characterized in that** the segment boundaries (48-54) extend from the outer side (36) of the filter element (18) to corner regions (66) of the inner region (56) of the filter element (18).

11. Filter element (18) according to Claim 10, **characterized in that**, in a corner region (66), a filter wall (68) forming a segment boundary (48) and two further filter walls (70) converge on one another such that an angle of 100° to 140°, in particular of 110° to 130°, more particularly of 120°, is enclosed between in each case two filter walls (68, 70).

12. Filter element (18) according to at least one of Claims 9 to 11, **characterized in that** two ducts (28a, 28b) which adjoin a segment boundary (48) and which are adjacent to one another in the circumferential direction are combined to form a common inlet duct (28c), and **in that** two ducts (30a, 30b) which are adjacent thereto transversely with respect to the circumferential direction are combined to form a common outlet duct (30c).

13. Particle filter (16) having a filter element (18) according to one of the preceding claims.

14. Exhaust-gas purification system (14), in particular having a particle filter (16), having a filter element (18) according to at least one of Claims 1 to 12.

## Revendications

1. Elément de filtre (18), notamment pour filtrer des gaz d'échappement d'un moteur à combustion interne (10), comprenant des canaux d'entrée (28) ouverts du côté de l'entrée dans la direction de l'écoulement (20) et fermés du côté de la sortie, et des canaux de sortie (30) fermés du côté de l'entrée dans la direction de l'écoulement (20) et ouverts du côté de la sortie, les canaux d'entrée (28) et les canaux de sortie (30) étant limités par des parois de filtre (32), **caractérisé en ce que** l'allure d'au moins une partie des parois de filtre (32) d'une région extérieure (46) de l'élément de filtre (18) est adaptée à l'allure d'un côté extérieur (36), au moins en partie courbé, de l'élément de filtre (18), la région extérieure (46) étant adjacente à une région intérieure (56) de l'élément de filtre (18), de section transversale d'ensemble polygonale, la région intérieure (56) étant courbée vers l'extérieur au niveau de ses limites (58-64) vers la région extérieure (46) de l'élément de filtre (18), la région intérieure (56) présentant une section transversale essentiellement carrée dans l'ensemble, et les parois de filtre (70) prévues dans la région intérieure (56) étant disposées de telle sorte que les canaux d'entrée (28) et les canaux de sortie (30) limités par ces parois de filtre (70) présentent une section transversale au moins approximativement quadrilatérale.

2. Elément de filtre (18) selon la revendication 1, **caractérisé en ce que** la section transversale de l'élément de filtre (18) est essentiellement cylindrique ou ovale.

3. Elément de filtre (18) selon la revendication 1, **caractérisé en ce que** le côté extérieur (36) de l'élément de filtre est limité en section transversale en alternance par des portions s'étendant en ligne droite et par des portions s'étendant de manière courbe.

4. Elément de filtre (18) selon au moins l'une quelconque des revendications précédentes, **caractérisé en ce que** les parois de filtre (32) sont disposées concentriquement l'une à l'autre dans une région adjacente au côté extérieur courbe (36).

5. Elément de filtre (18) selon au moins l'une quelconque des revendications précédentes, **caractérisé en ce qu'**une partie des parois de filtre (68) s'étend dans la direction radiale.

6. Elément de filtre (18) selon au moins l'une quelconque des revendications précédentes, **caractérisé en ce que** les parois de filtre d'une rangée de canaux d'entrée (28) et de canaux de sortie (30) directement adjacente au côté extérieur (36) de l'élément de filtre (18) sont adaptées à l'allure du côté extérieur (36).

7. Elément de filtre (18) selon au moins l'une quelconque des revendications précédentes, **caractérisé en ce que** les parois de filtre (32) de plusieurs rangées adjacentes de canaux d'entrée (28) et de canaux de sortie (30) sont adaptées à l'allure du côté extérieur (36).

8. Elément de filtre (18) selon au moins l'une quelconque des revendications précédentes, **caractérisé en ce que** la région extérieure (46) de l'élément de filtre (18) s'étend depuis le côté extérieur (36) jusqu'à un multiple de 0,1 à 0,4 fois le plus grand diamètre de l'élément de filtre (18).

9. Elément de filtre (18) selon au moins l'une quelconque des revendications précédentes, **caractérisé en ce que** la région extérieure (46) est divisée en segments (38 - 44), les limites des segments (48 - 54) s'étendant dans la direction radiale entre les segments (38 - 44).

10. Elément de filtre (18) selon la revendication 9, **caractérisé en ce que** les limites des segments (48 - 54) s'étendent depuis le côté extérieur (36) de l'élément de filtre (18) jusqu'à des régions de coin (66) de la région intérieure (56) de l'élément de filtre (18).

11. Elément de filtre (18) selon la revendication 10, **caractérisé en ce qu'**une paroi de filtre (68) formant une limite de segment (48) dans une région de coin (66) et deux parois de filtre supplémentaires (70) convergent l'une vers l'autre de telle sorte qu'entre deux parois de filtre respectives (68, 70) soit formé un angle de 100° à 140°, notamment de 110° à 130°, plus particulièrement de 120°.

12. Elément de filtre (18) selon au moins l'une quelconque des revendications 9 à 11, **caractérisé en ce que** deux canaux (28a, 28b) adjacents l'un à l'autre dans la direction périphérique, adjacents à une limite de segment (48), sont rassemblés en un canal d'entrée commun (28c), et **en ce que** deux canaux (30a, 30b) adjacents à celui-ci transversalement par rapport à la direction périphérique sont rassemblés en un canal de sortie commun (30c).

13. Filtre à particules (16) comprenant un élément de filtre (18) selon l'une quelconque des revendications précédentes.

14. Installation de purification des gaz d'échappement (14), en particulier avec un filtre à particules (16), comprenant un élément de filtre (18) selon au moins l'une quelconque des revendications 1 à 12.
